Europäisches Patentamt

European Patent Office

Office européen des brevets

(11) Veröffentlichungsnummer: **0 004 843**
**B1**

(12) **EUROPÄISCHE PATENTSCHRIFT**

(45) Veröffentlichungstag der Patentschrift: **16.09.81**

(21) Anmeldenummer: **78101161.4**

(22) Anmeldetag: **14.10.78**

(51) Int. Cl.³: **D 06 M 15/28,**
**D 06 M 15/26,**
**C 08 L 53/00, C 08 L 53/02**

(54) **In Halogenkohlenwasserstoffen lösliche Schlichtmittel für Textilgarne; Verfahren zum Schlichten von Textilgarnen.**

(30) Priorität: **17.04.78 DE 2816515**

(43) Veröffentlichungstag der Anmeldung:
**31.10.79 Patentblatt 79/22**

(45) Bekanntmachung des Hinweises auf die Patenterteilung:
**16.09.81 Patentblatt 81/37**

(84) Benannte Vertragsstaaten:
**BE CH DE FR GB NL**

(56) Entgegenhaltungen:
**DE - B - 1 133 337**
**DE - B - 2 441 277**
**FR - A - 2 104 837**
**GB - A - 1 334 582**

(73) Patentinhaber: **Röhm GmbH**
**Kirschenallee**
**D-6100 Darmstadt (DE)**

(72) Erfinder: **Fink, Herbert, Dr.**
**Berliner strasse 24**
**D-6101 Bickenbach (DE)**
Erfinder: **Grumbach, Egon**
**Heinrich-Fuhr-Strasse 66**
**D-6100 Darmstadt (DE)**
Erfinder: **Pennewiss, Horst, Dr.**
**Meissnerweg 53**
**D-6100 Darmstadt-Neu-Kranichstein (DE)**

Courier Press, Leamington Spa, England.

In Halogenkohlenwasserstoffen lösliche Schlichtmittel für Textilgarne; Verfahren zum Schlichten von Textilgarnen

Die Erfindung betrifft in Halogenkohlenwasserstoffen lösliche Schlichtmittel für Textilgarne. Schlichtmittel dieser Art gewinnen in dem Maße Interesse, wie die Entschlichtung von mit herkömmlichen wasserlöslichen Schlichtmitteln geschlichteten Garnen aufgrund verschärfter Abwasserbestimmungen erschwert wird. Es hat sich in vielen Fällen als wirtschaftlicher erwiesen, das Garn mittels halogenierter Kohlenwasserstoffe zu entschlichten und die Waschflüssigkeit destillativ zurückzugewinnen als das Schlichtmittel aus einer wäßrigen Entschlichtungsflotte abzuscheiden. Die Vorzüge des Schlichtens und Entschlichtens aus nichtwäßrigen Lösungsmitteln haben D. J. Lloyd in "Chemiefasern/Textilindustrie", Febr. 1978, S. 148, und F. J. Gierse in "Melliand Textilberichte" 1976, S. 538, geschildert. Danach gilt der Übergang zu völlig wasserunlöslichen Schlichtmitteln als zukunftsträchtig.

Aus der DE—AS 1 133 337 sind organische Schlichtmittellösungen mit einem Gehalt an Chlorkautschuk, Polychlorbutadien, Polyisobutylen, Polyacrylsäureestern, chlorsulfoniertem Polyäthylen, Polyvinyläther, Polyvinylacetat oder Vinylchlorid-Vinylester-Mischpolymerisaten bekannt. Alle diese Polymerisate haben sich als Schlichtmittel in der Praxis nicht bewährt, weil sie entweder zu weich und klebrig sind oder bei härterer Einstellung schlecht an der Faser haften und abplatzen.

Als in Halogenkohlenwasserstoffen lösliche Schlichtmittel wurden in der DT—OS 24 41 277 Mischpolymerisate aus 20 bis 80% Methylmethacrylat, Styrol oder Acrylnitril und 80 bis 20% Acrylestern oder höheren Methacrylestern vorgeschlagen. Ähnliche Mischpolymerisate mit einem zusätzlichen Anteil an Monomereinheiten mit Carboxylgruppen werden in der US—PS 3 728 299 und der Jap.—AS 76 05 117 als Schlichtmittel genannt. In der GB—PS 1 334 582 werden Copolymerisate von Vinylchlorid, Vinylidenchlorid, Vinylacetat und gegebenenfalls Acrylsäure als Schlichtmittel beschrieben. Diese Polymerisate ergeben noch keinen befriedigenden Fadenschluß. Es bestand die Aufgabe, den Fadenschluß durch ein neues Schlichtmittel zu verbessern.

Es wurde gefunden, daß in Halogenkohlenwasserstoffen lösliche Polymerisate von ungesättigten polymerisierbaren Kohlenwasserstoffen in einem organischen Lösungsmittel dann Schlichtfilme auf Textilgarnen mit den erwünschten Eigenschaften ergeben, wenn sie ein Polymerisat gemäß dem Kennzeichen des Hauptanspruches enthalten. (Die Kennzeichnung bezieht sich auf das feste, lösungsmittelfreie Polymerisat.)

Die getrennten Erweichungsbereiche der erfindungsgemäß in den neuen Schlichtmitteln enthaltenen Polymerisate lassen auf ein zweiphasiges System schließen. Es weist im Torsionsschwingungsversuch (z.B. nach DIN 53445) zwei Dämpfungsmaxima auf, welche ein thermoelastisches Niveau einschließen. Bei 20°C liegt die eine Phase im erweichten und die andere im glasigen oder kristallinen Zustand vor. Vorzugsweise liegt der untere Erweichungsbereich, d.h. die Glastemperatur, unter 0°C, und der obere Erweichungsbereich, also der Übergang vom thermoelastischen Niveau zum thermoplastischen Zustand, bei mehr als 60°C. Die Hartphase ist in der Weichphase dispers verteilt. Aufgrund der Blockstruktur wirken die dispersen Hartphasenteilchen als Vernetzungspunkte in der Weichphase und verleihen ihr gummielastische Eigenschaften.

Blockmischpolymerisate bilden in der Regel zweiphasage Systeme dieser Art aus. Die Zweiphasigkeit beruht auf der Unverträglichkeit der verschiedenen Polymerisatblöcke oder -segmente. Während sich Mischungen von Homopolymerisaten von Kohlenwasserstoffen, die in der Mehrzahl der Fälle unverträglich sind, bis zur Ausbildung getrennter Schichten entmischen können, bleibt die Phasentrennung bei Blockmischpolymerisaten auf disperse Bereiche innerhalb der Weichphase beschränkt. In manchen Fällen ist die Phasentrennung unvollständig, z.B. bei partieller Kristallisation der mit der Weichphase unverträglichen Blöcke.

Die auf der Phasentrennung beruhende physikalische Vernetzung ist von reversibler Natur. Die Blockmischpolymerisate sind daher in Halogenkohlenwasserstoffen löslich und beim Überschreiten des zweiten Erweichungsbereichs schmelzbar. Die Eignung als Schlichtfilm beruht im wesentlichen auf dem Vorhandensein des erwähnten thermoelastischen Niveaus. Die Polymerisate sind bei Raumtemperatur einerseits weich und elastisch, da sie oberhalb des Glaszustandes vorliegen, andererseits zeichnen sie sich durch geringe Klebrigkeit aus.

Blockmischpolymerisate sind nach einer Reihe von bekannten Verfahren zugänglich, für die in Houben-Weyl, "Methoden der organischen Chemie", Band 14/1, S. 110—115 mehrere Beispiele angegeben sind. Die Herstellung der Polymerisate ist nicht Gegenstand der vorliegenden Erfindung. In den Blockmischpolymerisaten können die verschiedenen Blöcke in einem Fadenmolekül einander abwechseln oder die Blöcke der einen Polymerisatkomponente können kammartig an eine Kette der anderen Polymerkomponente gebunden sein; in diesem Falle spricht man auch von Pfropfmischpolymerisaten. Die zu ihrem Aufbau verwendeten ungesättigten polymerisierbaren Kohlenwasserstoffe werden so gewählt, daß ihre jeweiligen Homopolymerisate unverträglich sind und unterschiedliche Erweichungstemperaturen haben. Diese stimmen nicht inner genau mit den Erweichungstemperaturen des Blockmischpolymerisats überein. Wenigstens einer der ungesättigten Kohlenwasserstoffe sollt ein Homopolymerisat mit einer unter 20° liegenden Erweichungstemperatur (nach DIN 53445) ergeben.

Zu den ungesättigten Kohlenwasserstoffen, aus denen die Blockmischpolymerisate aufgebaut sein können, gehören α-Olefine, wie Äthylen, Propylen, Butylen, Isobutylen und die hoheren α-Olefine mit 5 bis 12 C-Atomen, Diene, insbesondere Butadien und Isopren, sowie Vinylaromaten, wie Styrol. In der Regel sind am Aufbau der Mischpolymerisate nicht mehr als zwei ungesättigte Kohlenwasserstoffe beteiligt. Jeder der beteiligten Kohlenwasserstoffe liegt vorzugsweise in einem Anteil von wenigstens 10% des Mischpolymerisats vor. Wenn das Mischpolymerisat aus mehr als zwei ungesättigten Kohlenwasserstoffen aufgebaut ist, so genügt es, daß wenigstens zwei der entsprechenden Homopolymerisate miteinander unverträglich sind. Das Mischungsverhältnis wird jeweils so gewählt, daß die Blöcke mit dem höheren Erweichungsbereich die disperse Phase bilden. Die Blockmischpolymerisate lassen sich in an sich bekannter Weise teils durch radikalische, teils durch anionische, teils durch Ziegler-Natta-Polymerisation herstellen. Als Handelsform eignen sich außer den gebrauchsfertigen Lösungen vor allem die kleinteiligen festen Polymerisate oder ihre beispielsweise 50 Gew.-prozentigen Konzentratlösungen.

Als Beispiel für die erfindungsgemäß in den Schlichtmitteln enthaltenen Polymerisate seien Blockmischpolymerisate aus 65 bis 90 Gew.-% Äthylen und 35 bis 10 Gew.-% Propylen, die durch Ziegler-Natta-Polymerisation hergestellt worden sind, genannt. Sie enthalten Polyäthylenblöcke, die eine lokale Ausbildung von kristallinen Bereichen gestatten, sind aber überwiegend amorph. Die beiden Erweichungstemperaturen liegen bei —34 und 49°C. Ähnliche Eigenschaften weisen gesättigte Blockmischpolymerisate aus 40 bis 60 Gew.-% Styrol und 60 bis 40 Gew.-% Butadien oder Isopren auf. Sie werden durch anionische Polymerisation der genannten Monomeren erzeugt. Die darin enthaltenen ungesättigten Gruppen, die die Polymerisate namentlich in Form dünner Filme oxidationsempfindlich machen würden, werden hydriert. Dabei entstehen gesättigte Polymerisate, die weitgehend frei von Doppelbindungen sind. Die aromatischen Reste der Styroleinheiten gelten im Sinne der Erfindung nicht als "ungesättigt". In diesen Mischpolymerisaten vereinigen sich die aus Styroleinheiten aufgebauten Blöcke zu glasig erstarrten Bereichen. Das thermoelastische Niveau dieser Polymeren erstreckt sich von —52 bis 109°C.

Zur Herstellung der Schlichtflotte werden die Mischpolymerisate in einer Konzentration von etwa 2,5 bis 15 Gew.-% in einem Lösungsmittel, vorzugsweise Perchloräthylen, gelöst.

Die Viskosität der Lösung bei der Anwendungstemperatur soll aus technischen Gründen 1000 mPa.s nicht überschreiten und liegt vorzugsweise bei 20 bis 800 mPa.s. Man erreicht Viskositäten in diesem Bereich, wenn man Polymerisate mit einem Molekulargewicht zwischen 10.000 und 200.000 verwendet. Das bevorzugte Molekulargewicht beträgt 80.000 bis 120.000; jeweils gemessen als Gewichtsmittel.

Die neuen Schlichtmittel eignen sich zum Schlichten von Endlos- und Stapelfasergarnen aus Naturfasern und Chemiefasern, wie Baumwolle, Wolle, Seide, Reyon, Cupro, Zellwolle, Acetat, Polyester, Polyamid, Polyacryl oder Polypropylen sowie von Mischfasergarnen. Vorzugsweise werden Garne von der in der nachfolgenden Tabelle angegebenen Art mit den erfindungsgemäßen Mitteln geschlichtet. Sie werden, zweckmäßig durch Hindurchführen durch die Schlichtflotte, Abquetschen und anschließende Trocknung, z.B. mittels Heißluft oder beheizten Zylindern, bei Trocknungstemperaturen zwischen 30 und 200°C, in einer Menge von 0,2 bis 25 Gew.-% auf das Garn aufgebracht. Neben der im allgemeinen bevorzugten Kettenschlichtung kommt auch die Einzelfaden- oder Spulenschlichtung in Betracht.

Die geschlichtete Kette verklebt auch bei hoher Luftfeuchtigkeit oder bei verhältnismäßig hohen Lagertemperaturen nicht. Fadenstand und Fadenschluß erfüllen die für moderne Webmaschinen gestellten Forderungen.

Die Überlegenheit der erfindungsgemäßen Schlichtmittel gegenüber denen gemäß der DE—OS 24 41 277, die kein thermoelastisches Niveau haben, geht aus der nachfolgenden Tabelle hervor.

Die in der Tabelle mit A und B bezeichneten Polymerisate sind Schlichtmittel nach der vorliegenden Erfindung.

A ist ein Blockcopolymerisat aus 72 Gew.-% Äthylen und 28 Gew.-% Propylen, MG 100.000, Glastemperatur —34°C. Obere Erweichungstemperatur 49°C.

B ist ein hydriertes (gesättigtes) Blockcopolymerisat aus 45 Gew.-% Styrol und 55 Gew.-% Butadien, MG 100.000, Glastemperatur 52°C, obere Erweichungstemperatur 109°C.

Zum Vergleich wird ein statistisches Copolymerisat C gemäß DT—OS 24 41 277 (Beispiel 10) aus 80 Gew.-% Butylmethacrylat und 20 Gew.-% Methylmethacrylat, MG 200.000, Glastemperatur 41°C, E-Modul 900 N/mm², eingesetzt.

Verschiedene Garne werden mit 5%igen Lösungen der Schlichtmittel A, B bzw. C geschlichtet, abgequetscht und bei 110°C getrocknet. Der Schlichteffekt wird an der Einwirkung einer standardisierten Reibbeanspruchung auf den geschlichteten Faden bewertet.

Die standardisierte Reibbeanspruchung wird mittels eines Reibnockens aus gerundetem, aufgerauhtem Glas erzeugt, der mit einem radialen Abstand von 147 mm mit 30 Upm um eine waagerechte Achse rotiert und bei jedem Umlauf einmal den 45 cm langen, senkrecht hängenden, mit 50 g belasteten Prüffaden etwa in der Fadenmitte um 20 mm seitlich auslenkt.

Für Endlosfasergarne ist die Zahl der Reibhübe (Umläufe) angegeben, bei der sich der Garnverband (Fadenschluß) auflöst. Bei Baumwollgarnen wird die Haarigkeit und Rauhigkeit nach 20 Reibhüben (Umläufen) qualitativ beurteilt.

| Garn | Schlichteffekt erfindungsgemäße Schlichtmittel | | Vergleichsversuch |
|---|---|---|---|
| | A | B | C |
| Reyon, dtex 133 f 24 | 110 | 1300 | 25 |
| Acetat, dtex 110 f 28 | 55 | 350 | 30 |
| Polyester, glatt, ungedreht, dtex 78 f 26 | 15 | 20 | 10 |
| Polyamid, glatt, ungedreht, dtex ·78 f 18 | 20 | 80 | 5 |
| Baumwolle, dtex 145 f 1 | sehr gut | gut | mittel |

Zum Schlichten wie zum Entschlichten wird hauptsächlich Perchloräthylen eingesetzt. G. Reinert hat die Vorzüge dieses Lösungsmittels für den Bereich der Textilindustrie in "Textilveredelung" 11 (1976), S. 109 ff. vor allen anderen Lösungsmitteln herausgestellt. Deshalb ist die Löslichkeit des Polymerisats in diesem Lösungsmittel von besonderer Bedeutung. Als Lösungsmittel kommen auch andere Halogenkohlenwasserstoffe, besonders solche mit einem oder zwei Kohlenstoffatomen in Betracht, z.B. 1,1,1 - Trichloräthan, Trichlorfluormethan und 1,1,2-Trichlor-1,2,2-tri-fluoräthan, sowie — mit geringerer Bedeutung — Trichloräthylen, Tetrachlorkohlenstoff und Chloroform. Es ist jedoch nicht erforderlich, daß das Polymerisat in jedem dieser Halogenkohlenwasserstoffe löslich ist. Sofern das Polymerisat außer in Halogenkohlenwasserstoffen auch in anderen organischen Lösungs-mitteln, wie Benzinkohlenwasserstoffen, Aromaten oder Estern löslich sind, können auch diese zum Schlichten oder Entschlichten verwendet werden, obwohl sie wegen ihrer Brennbarkeit weniger geeignet sind. Die Verwendung von Lösungsmitteln oder Lösungsmittelzusätzen, in denen die Molekülblöcke der dispersen Phase eine geringere Löslichkeit haben als die der amorphen Weichphase, fördert die Ausbildung getrennter Phasen und verbessert die Eigenschaften des Schlichtfilms.

Die Entschlichtungsflotte kann anschließend filtriert oder auf andere Weise gereinigt und destillativ aufgearbeitet und das zurückbleibende Schlichtmittel gegebenenfalls weitere Male zum Schlichten verwendet werden.

## Patentansprüche

Schlichtmittellösung für Textilgarne bestehend aus einer 2,5 bis 50 Gew.-prozentigen Lösung eines in Halogenkohlenwasserstoffen löslichen Polymerisats von ungesättigten polymerisierbaren Kohlenwasserstoffen in einem organischen Lösungsmittel, dadurch gekennzeichnet, daß die Schlichtmittellösung durch Auflösen des festen Polymerisats in dem organischen Lösungsmittel hergestellt worden ist und das genannte Polymerisat ein Molekulargewicht zwischen 10.000 und 200.000 hat und ein gesättigtes Pfropfmischpolymerisat oder Mischpolymerisat mit Blockstruktur aus wenigstens zwei verschiedenen ungesättigten polymerisierbaren Kohlenwasserstoffen mit zwei getrennten Erweichungstemperaturen ist, von denen eine unter 20°C und eine über 20°C liegt, worin die Blöcke mit der höheren Erweichungstemperatur eine disperse Phase bilden.

2. Schlichtmittellösung nach Anspruch 1, dadurch gekennzeichnet, daß das organische Lösungsmittel ein Halogenkohlenwasserstoff, insbesondere mit 1 oder 2 Kohlenstoffatom, ist.

3. Schlichtmittellösung nach Anspruch 2, dadurch gekennzeichnet, daß der Halogenkohlenwasserstoff Perchloräthylen ist.

4. Schlichtmittellösung nach den Ansprüchen 1 bis 3, dadurch gekennzeichnet, daß das Polymerisat ein gesättigtes Blockmischpolymerisat aus wenigstens zwei ungesättigten Kohlenwasserstoffen aus der Gruppe der $\alpha$-Olefine, Diene und/oder Vinylaromaten ist.

5. Schlichtmittellösung nach den Ansprüchen 1 bis 4, dadurch gekennzeichnet, daß das Mischpolymerisat aus 65 bis 90 Gew.-% Äthylen und 10 bis 35 Gew.-% Propylen aufgebaut ist.

6. Schlichtmittellösung nach den Ansprüchen 1 bis 4, dadurch gekennzeichnet, daß das Mischpolymerisat aus 40 bis 60 Gew.-% Styrol und 60 bis 40 Gew.-% Butadien oder Isopren mit Blockstruktur bzw. nicht-statistischer Verteilung der Styrol-Bausteine besteht.

7. Verfahren zum Schlichten von Textilgarnen, dadurch gekennzeichnet, daß man das Textilgarn mit einer Schlichtmittellösung gemäß den Ansprüchen 1 bis 6 überzieht und das Lösungsmittel verdampft.

8. Verfahren nach Anspruch 7, dadurch gekennzeichnet, daß man Garne oder Mischgarne aus Baumwolle, Celluloseregeneratfasern, Celluloseacetat, Polyester und/oder Polyamid schlichtet.

## Claims

1. Size solution for textile yarns, consisting of a 2.5 to 50% by weight solution, in an organic solvent, of a polymer of unsaturated polymerisable hydrocarbons which is soluble in halohydrocarbons, characterised in that the size solution is prepared by dissolving the solid polymer in the organic solvent and said polymer has a molecular weight of between 10,000 and 200,000 and is a saturated graft copolymer or block copolymer of at least two different unsaturated polymerisable hydrocarbons with two distinct softening temperatures, one being below 20°C and one being above 20°C, wherein the blocks with the higher softening temperature form a dispersed phase.

2. Size solution according to claim 1, characterised in that the organic solvent is a halohydrocarbon, particularly with 1 or 2 carbon atoms.

3. Size solution according to claim 2, characterised in that the halohydrocarbon is perchloroethylene.

4. Size solution according to claims 1 to 3, characterised in that the polymer is a saturated block copolymer of at least two unsaturated hydrocarbons selected from the group of $\alpha$-olefins, dienes and/or vinyl aromatics.

5. Size solution according to claims 1 to 4, characterised in that the copolymer is made up of 65 to 90% by weight of ethylene and 10 to 35% by weight of propylene.

6. Size solution according to claims 1 to 4, characterised in that the copolymer consists of 40 to 60% by weight of styrene and 60 to 40% by weight of butadiene or isoprene with a block structure or a non-statistical distribution of the styrene units.

7. Method of sizing textile yarns, characterised in that the textile yarn is coated with a size solution according to claims 1 to 6 and the solvent is evaporated.

8. Method according to claim 7, characterised in that yarns or blended yarns consisting of cotton, rayon filaments, cellulose acetate, polyester and/or polyamide are sized.

## Revendications

1. Solution d'agent d'encollage pour fils textiles, se composant d'une solution à 2,5—50% en poids d'un polymère d'hydrocarbures insaturés polymérisables, soluble dans des hydrocarbures halogénes, dans un solvant organique, caractérisée en ce qu'elle a été préparée par dissolution du polymère solide dans le solvant organique et en ce que ledit polymère a un poids moléculaire compris entre 10 000 et 200 000 et est un copolymère greffé saturé ou un copolymère saturé à structure séquencée d'au moins deux hydrocarbures insaturés polymérisables différents, ayant deux températures de ramollissement séparées dont l'une se situe au-dessous de 20°C et l'autre au-dessus de 20°C, les séquences dont la température de ramollissement est plus élevée formant une phase dispersée.

2. Solution d'agent d'encollage selon la revendication 1, caractérisée en ce que le solvant organique est un hydrocarbure halogéné, comportant en particulier 1 ou 2 atomes de carbone.

3. Solution d'agent d'encollage selon la revendication 2, caractérisée en ce que l'hydrocarbure halogéné est le perchloréthylène.

4. Solution d'agent d'encollage selon l'une quelconque des revendications 1 à 3, caractérisée en ce que le polymère est un copolymère séquencé saturé d'au moins deux hydrocarbures insaturés choisis dans le groupe des $\alpha$-oléfines, des diènes et/ou des carbures vinyl aromatiques.

5. Solution d'agent d'encollage selon l'une quelconque des revendications 1 à 4, caractérisée en ce que le copolymère est composé de 65 à 90% en poids d'éthylène et de 10 à 35% en poids de propylène.

6. Solution d'agent d'encollage selon l'une quelconque des revendications 1 à 4, caractérisée en ce que le copolymère se compose de 40 à 60% en poids de styrène et de 60 à 40% en poids de butadiène et d'isoprène, avec une structure séquencée ou une distribution non statistique des segments styrène.

7. Procédé pour l'encollage de fils textiles, caractérisé en ce qu'on revêt le fil textile d'une solution d'agent d'encollage selon l'une quelconque des revendications 1 à 7 et on évapore le solvant.

8. Procédé selon la revendication 7, caractérisé en ce qu'on encolle des fils ou fils mixtes de coton, de fibres de cellulose régénérée, d'acétate de cellulose, de polyester et/ou de polyamide.